# EUROPEAN PATENT APPLICATION

(11) **EP 4 235 885 A1**
(43) Date of publication of application: **30.08.2023**
(21) Application number: 22158272.9
(22) Date of filing: 23.02.2022
(51) Int. Cl.: H01M 10/04, H01M 10/0587, B23K 20/10

(54) **MANUFACTURING METHOD OF AN INTERMEDIATE PRODUCT FOR A BATTERY CELL, INTERMEDIATE PRODUCT FOR A BATTERY CELL AND ULTRASONIC DEVICE FOR MANUFACTURING THE INTERMEDIATE PRODUCT**

(71) Applicant: Branson Ultraschall Niederlassung der Emerson Technologies GmbH & Co. OHG, 63128 Dietzenbach (DE)
(72) Inventor: GÜLTEKIN, Oktay, 63067 Offenbach am Main (DE); CZAJA, Sebastian, 64390 Erzhausen (DE)
(74) Representative: HWP Intellectual Property

(57) **Abstract**

A manufacturing method of an intermediate product for a battery cell by means of ultrasonics, comprises the steps of: providing (A) a wound battery cell body (10) in which a layer of a first electrode, a separator and a second electrode is wound around a central longitudinal axis in a plurality of windings, wherein at least one of the first and the second electrode comprises a conductive portion (12) extending at one front-end in the longitudinal direction, wherein the conductive portion (12) preferably comprises or consists of a metal foil, placing (B) the wound battery cell body (10) in an ultrasonic device (1) in an initial position so that the front-end of the wound battery cell body (10) having the conductive portion (12) faces a front-end working surface (5) of a horn (3) of the ultrasonic device (1), moving (C) the wound battery cell body (10) and the horn (3) with respect to each other from the initial position to a working position in which the front-end working surface (5) of the horn (3) abuts the front-end of the wound battery cell body (10), subsequently working (D) the wound battery cell body (10) by applying ultrasonics to the conductive portion (12) at the front-end of the wound battery cell body (10) at least partially so that the conductive portion (12) is at least partially deformed, preferably bend, at the front-end of the wound battery cell body (10) by the horn (3) and a worked wound battery cell body (20) results, thereafter moving (E) the worked wound battery cell body (20) and the horn (3) with respect to each other from the working position to a removing position and removing (F) the worked wound battery cell body (20) from the ultrasonic device (1).

## Description

### 1. Field of the invention

The present invention is related to a manufacturing method of an intermediate product for a battery cell, an intermediate product for a battery cell and an ultrasonic device for manufacturing the intermediate product.

### 2. Background of the invention

In electric vehicles and similar applications, several types of batteries are used and several improvements relating to these batteries have been made in the past.

Presently, some batteries use battery cells having a spiral-like design. In such a design, a layer having a cathode, an anode and at least one separator is rolled around a central longitudinal axis. Often, the anode and the cathode in this layer are formed by means of a metal foil. In other words, these batteries consist of a rolled-up metal foil with a paste.

The cathode as well as the anode have a tab for connecting the rolled or wound battery cell body electrically to a housing of the battery cell body. Thus, at the end of the resulting coil there is a tab.

For charging or discharging the battery, the current must go through the entire coil or winding via the tab. This limits the dimensioning of the battery cells as the ohmic resistance is increased with distance when current must travel all the way along the cathode or anode to the tab and out of the cell and the resulting heat must be dissipated.

An approach for increasing the dimensions of such battery cells is to establish a cross-connection in this coil, which eliminates the need for the tab. This makes the path for the electricity much shorter and the shorter path for the current reduces the resistance, which means that less heat is generated. An example of such a battery cell is described in US 2020/0144676 A1.

According to US 2020/0144676 A1 the cell includes a first substrate having a first coating disposed thereon, wherein a second portion of the first substrate at a proximal end along the width of the first substrate comprises a conductive material. An inner separator is disposed over the first substrate. A second substrate is disposed over the inner separator. The second substrate has a second coating disposed thereon. The first substrate, the inner separator, and the second substrate in a successive manner, the first substrate, the inner separator, and the second substrate are rolled about a central axis.

In view of the above prior art, it is an object of the present invention to provide an alternative manufacturing method of an intermediate product of a battery cell, an intermediate product for a battery cell and an ultrasonic device for manufacturing an intermediate product for a battery cell.

### 3. Summary of the invention

The above object is solved by a manufacturing method of an intermediate product for a battery cell according to claim 1, an intermediate product for a battery cell according to claim 12 and an ultrasonic device for manufacturing an intermediate product for a battery cell according to claim 13. Further preferred embodiments and developments result from the following description, the drawings as well as the appending claims.

An inventive manufacturing method of an intermediate product for a battery cell by means of ultrasonics comprises the steps of providing a wound battery cell body in which a layer of a first electrode, a separator and a second electrode is wound around a central longitudinal axis in a plurality of windings, wherein at least one of the first and the second electrode comprises a conductive portion extending at one front-end in the longitudinal direction, wherein the conductive portion preferably comprises or consists of a metal foil, placing the wound battery body in an ultrasonic device in an initial position so that the front-end of the wound battery cell body having the conductive portion faces a front-end working surface of a horn of the ultrasonic device, moving the wound battery cell body and the horn with respect to each other from the initial position to a working position in which the front-end working surface of the horn abuts the front-end of the wound battery cell body, subsequently working the wound battery cell body by applying ultrasonics to the conductive portion at the front-end of the wound battery cell body at least partially so that the conductive portion is at least partially deformed, preferably bend, at the front-end of the wound battery cell body by the horn and a worked wound battery cell body results, thereafter moving the worked wound battery cell body and the horn with respect to each other from the working position to a removing position and removing the worked wound battery cell body from the ultrasonic device.

Starting point for the inventive manufacturing method is a wound or rolled battery cell body as it is generally known. As discussed above, such a wound battery cell body consists of a layer of a first electrode, for example a cathode, a separator and a second electrode, for example an anode, which is rolled up around a central longitudinal axis. Accordingly, the first electrode is arranged on a first side of the separator and the second electrode is arranged on the second side of the separator opposite to the first side. In some cases, further separators may be present. In other words, the wound battery cell body may be formed by a rolled-up metal foil with a paste on it. When viewed from above, i.e., along the central longitudinal axis, the layer of the wound battery cell body has the shape of a spiral. Accordingly, the radial distance between the layer and the central longitudinal axis changes continuously.

At least one of the first electrode, i.e., the cathode, and the second electrode, i.e., the anode, comprises the conductive portion. Preferably, the conductive portion comprises or consist of a metal foil. The conductive portion extends initially at the front-end in the longitudinal direction of the battery cell body. Assuming the first electrode has a first conductive portion, the respective first conductive portion would extend from a first front-end of the wound battery cell body. Accordingly, and in case the second electrode has also a conductive portion, i.e., a second conductive portion is present, this second conductive portion would extend from a second front-end of the wound battery cell body opposite to the first front-end.

After such a wound battery cell body has been provided in a first step, it is placed in a second step in the ultrasonic device in an initial position. To this end, the battery cell body is preferably fixed at the lateral surface in the ultrasonic device, for example by means of clamping. In this regard, it must be noted in particular in case only one front-end having a conductive portion is present that the wound battery cell body is arranged in the ultrasonic device such that the respective front-end faces a working surface of the horn of the ultrasonic device. To this end, the horn of the ultrasonic device comprises a working surface at the front-end so that oscillations of the horn occur along the central longitudinal axis.

Next, the wound battery cell body and the horn are moved with respect to each other from the initial position to the working position. For example, the wound battery cell body is arranged in a position stable manner in the ultrasonic device and the horn is moved along the central longitudinal axis towards the battery cell body until the working surface of the horn abuts the conductive portion at the front-end of the battery cell body. In this regard, it is particularly preferred that a movement of the wound battery cell body and the horn with respect to each other occurs only along the central longitudinal axis.

Now, the horn is energized such that ultrasonic oscillations occur and are applied to the conductive portion at the front-end of the wound battery cell body. During the application of ultrasonics, and with respect to the above example, the horn is further moved along the central longitudinal axis towards the battery cell body which results in a deformation of the conductive portion, preferably in a bending and particularly preferred in a radially inwardly bending of the conductive portion. In this regard it must be noted that the application of ultrasonics and the further movement of the horn during the step of working may occur at the same time or one after the other. At the end of the working step, the conductive portion is preferably deformed such that radially adjacent conductive portions are in contact with each other.

After the working step has been completed and a worked wound battery cell body is present, the horn and the worked wound battery cell body are moved with respect to each other from the working position to a removing position. Preferably, and with respect to the above example, the movement occurs along the central longitudinal axis. In the removing position, the distance between the working surface of the horn and the worked wound battery cell body is increased. For example, the removing position is similar to the above-mentioned initial position.

Finally, the worked wound battery cell body is removed from the ultrasonic device. To this end, and in case the battery cell body was initially fixed at the lateral surface, now the fixing, for example the clamping, at the lateral surface is released. As a result, the worked wound battery cell body can be removed from the ultrasonic device and can be further processed for manufacturing a battery.

An advantage of the present invention is that the conductive portion of the battery cell body can be deformed in an easy and reliable manner by means of a horn of an ultrasonic device. Further, and due to the application of ultrasonics, a reliable connection between adjacent conductive portions results. In particular, and if for example no ultrasonic oscillations would be applied, the risk that fine cracks in the conductive portion occur, in particular in a metal foil conductive portion, is drastically increased. Thus, the application of ultrasonic oscillations ensures a reliable deformation with a reduced risk of damaging the conductive portion. At the same time, the working by means of ultrasonics ensures a well-arranged or organized deforming of the conductive portion.

According to a preferred embodiment of the manufacturing method, the cross-section of the horn is round or angular. Further preferred, the dimension of the working surface of the horn is adapted to the dimension of the front-end of the wound battery cell body, in particular such that the working surface extends at least about 3 to 5 mm beyond the front-end of the wound battery cell body. Due to the different cross-sectional shapes of the horn, the horn can be adapted to the preferred application and battery cell body. In each case, a certain extension of the horn perpendicular to the central longitudinal axis, in particular an extension of at least 3 to 5 mm, has been proven to be advantageous. In particular due to this extension, a very reliable deforming, particularly bending, of the conductive portion is achieved.

In a further preferred embodiment of the manufacturing method, the working surface of the horn comprises a contour adapted to the wound battery cell body, in particular an at least two-stepped contour and/or a profiled contour. For example, and with respect to the two-stepped contour, the working surface may be formed radially outwardly such that it deforms the conductive portion wherein radially inwardly a recess is present at the working surface so that the conductive portion is radially inwardly not deformed. Further, and with respect to the profiled contour, for example a knurling may be present which further increases the reliability of the contact between radially adjacent conductive portions. Also, the contour may have a cone-shape or a pyramid shape, depending on the cross section of the horn. In each case, it is preferred that an imaginary tip of the cone or pyramid-shape is arranged in the horn. In other words, the working surface comprises a respectively shaped indentation.

According to a further preferred embodiment of the manufacturing method, the wound battery cell body comprises a jacket, preferably a cylindrical jacket. Particularly preferred, the jacket has an extension in the longitudinal direction which is lower than an extension of the wound battery cell body prior to the step of working. In other words, the longitudinal extension of the jacket is preferably chosen such that it corresponds to the longitudinal length of the wound battery cell body minus the length of the conductive portion in the initial state. The usage of the jacket has the advantage that the wound battery cell body is not damaged in case the wound battery cell body is fixed at the lateral surface, for example by clamping, in the ultrasonic device. This decreases the risk of damages as well as the manufacturing of substandard goods.

Preferably, the method is controlled by means of at least one of the following parameters: time, path, force, amplitude. This applies particularly to the step of working. For example, the step of working is performed depending on the path the working surface of the horn travels. If the conductive portion has an extension of 1 mm, the path the horn travels during the working step is for example at most also 1 mm. As an alternative, the force applied by the horn, or the amplitude of the ultrasonic oscillation applied by the horn to the conductive portion may be used as primary parameter. In this regard, the term primary parameter is used for indicating the parameter used mainly for controlling the method, although other parameters may be used additionally. By means of this, the manufacturing method can be adapted to the wound battery cell body to be worked for example depending on the thickness of the layer, the material used for the layer or the conductive portion, or the extension of the layer or the conductive portion in the longitudinal direction.

In a further preferred embodiment of the manufacturing method, the conductive portion is bend during the step of working by the horn radially inwardly so that an extension of the battery cell body in the longitudinal direction is reduced. In this regard, it is particularly preferred that radially adjacent conductive portions are in contact with each other after the step of working. The radially inwardly bending of the conductive portion has the advantage that the radial dimensions of the worked wound battery cell body is not increased compared to the initially provided wound battery cell body.

Further preferred, after the step of working radially adjacent conductive portions are fixedly connected to each other, in particular they are welded to each other. Due to the fixed connection, the connection is very reliable and resistant against vibrations or the like during use of a respectively worked wound battery cell body in a vehicle or similar applications.

An inventive intermediate product for a battery cell has a wound battery cell body in which a layer of a first electrode, a separator and a second electrode is wound around a central longitudinal axis in a plurality of windings, wherein at least one of the first and the second electrode comprises a conductive portion, which was manufactured by means of the inventive manufacturing method and comprises a front-end having a conductive portion worked by means of ultrasonics. The inventive intermediate product is the result of the above-described inventive manufacturing method. Thus, and for avoiding unnecessary repetitions, it is referred to the above discussion with respect to the resulting technical effects and advantages.

An inventive ultrasonic device for manufacturing an intermediate product for a battery cell having a wound battery cell body in which a layer of a first electrode, a separator and a second electrode is wound around a central longitudinal axis in a plurality of windings, wherein at least one of the first and the second electrode comprises a conductive portion extending at one front-end in the longitudinal direction, comprises an ultrasonic power supply, a converter, a booster and an ultrasonic horn, and the controller is adapted such that the ultrasonic device can perform steps c. to e. of the inventive manufacturing method. Thus, and by means of the inventive ultrasonic device, the inventive manufacturing method can be applied to an intermediate product for a battery cell. Consequently, it is again referred to the above-described technical effects and advantages.

In a preferred embodiment of the ultrasonic device, the working range is about 15 to 40 kHz, preferably about 15 to 30 kHz and more preferably about 20 kHz. Specifically, these working ranges ensure on the one hand the application of ultrasonics to the conductive portion of the battery cell body and on the other hand they facilitate a reliable connection of radially adjacent conductive portions.

### 4. Brief description of the drawings

In the following, the present invention will be described in detail based on the drawings. In the drawings, the same reference signs denote the same elements and/or components. It shows:
- Figure 1: an embodiment of an inventive ultrasonic device for manufacturing an intermediate product for a battery cell,
- Figure 2: illustrates a wound battery cell body and a horn of an ultrasonic device in an initial position,
- Figure 3: shows the wound battery cell body and the horn in a first intermediate position,
- Figure 4: depicts the wound battery cell body and the horn in a working position at the beginning of the step of working,
- Figure 5: illustrates the wound battery cell body and the horn in a working position at the end of the step of working,
- Figure 6: shows the worked wound battery cell body and the horn in a second intermediate position,
- Figure 7: illustrates the worked wound battery cell body in a perspective view,
- Figure 8: shows the worked wound battery cell body in a top view,
- Figure 9: depicts two wound batter cell bodies and
- Figure 10: shows a flow chart of an embodiment of an inventive manufacturing method.

### 5. Detailed description of preferred embodiments

In the following, an embodiment of the inventive manufacturing method will be described in detail.

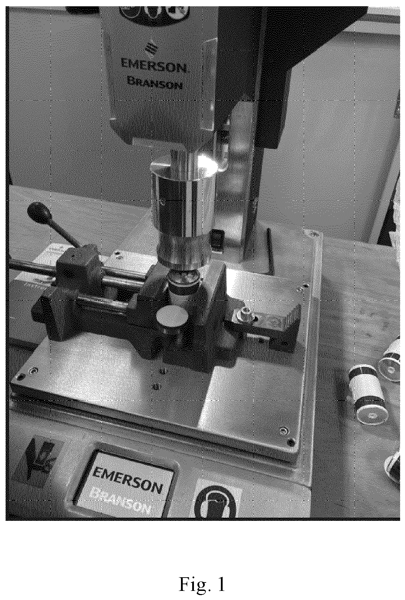

First, it is referred to figure 1 for explaining the general construction of an embodiment of an ultrasonic device 1 used for at least some steps of the manufacturing method.

The ultrasonic device 1 comprises in the known manner an ultrasonic power supply, a converter, a booster, and an ultrasonic horn 3 having a working surface 5. Further, the ultrasonic device 1 comprises in the present example a fixture 7 for fixing a wound battery cell body 10. The controller is adapted such that the ultrasonic device can perform at least some steps of the manufacturing method.

The wound battery cell body 10 comprises a layer of a first electrode, a separator and a second electrode. For example, the first electrode may be a cathode and the second electrode may be an anode. In the following and for an easier understanding, the terms cathode and anode are used for indicating the first and the second electrode. Cathode and anode are arranged on opposite sides of the separator. If necessary, further separators may also be present in the layer, for example on the side of the first electrode opposite to the separator or on the side of the second electrode opposite to the separator.

The layer is wound around a central longitudinal axis in a plurality of windings. Thus, starting point for the inventive manufacturing method is a wound or rolled battery cell body as it is generally known. Such a wound battery cell body may be formed by a rolled-up metal foil with a paste on it, as initially explained. Further, and when viewed from above, i.e., along the central longitudinal axis, the layer of the wound battery cell body has the shape of a spiral. Accordingly, the radial distance between the layer and the central longitudinal axis changes continuously.

Further, at least one of the cathode and the anode comprises a conductive portion extending at one front-end in the longitudinal direction. With respect to figures 1 to 4, the conductive portion 12 is arranged opposite to the working surface 5 of the horn 3, i.e., the conductive portion 12 faces the working surface 5 and vice versa. Preferably, the conductive portion comprises or consists of a metal foil.

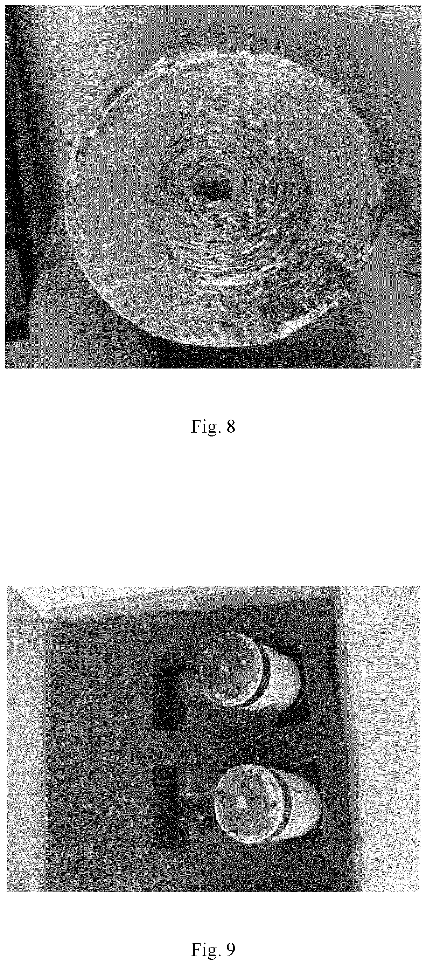

Additionally, the wound battery cell body 10 comprises a cylindrical jacket 30. Particularly preferred, the jacket 30 has an extension in the longitudinal direction which is lower than an extension of the wound battery cell body 10. In other words, the longitudinal extension of the jacket 10 is preferably chosen such that it corresponds to the longitudinal length of the wound battery cell body 10 minus the length of the conductive portion 12 in the initial state. The usage of the jacket has the advantage that the wound battery cell body 10 is not damaged in case the wound battery cell body 10 is fixed at the lateral surface, for example by clamping, in the ultrasonic device 1. This decreases the risk of damages as well as the manufacturing of substandard goods. Examples of two wound battery cell bodies 10 are shown in figure 9.

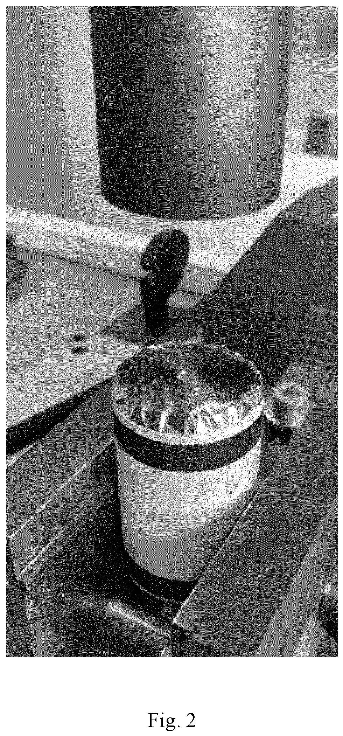

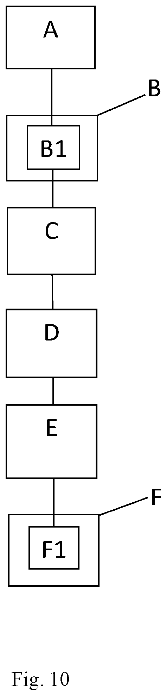

According to figure 2, the wound battery cell body 10 was provided and placed in the ultrasonic device 1 in an initial position. This corresponds to steps A and B of the manufacturing method shown in figure 10. As can be seen in figure 2, the step of placing comprised the step B1 of fixing the wound battery cell body at the lateral surface, in particular by means of clamping with the fixture 7.

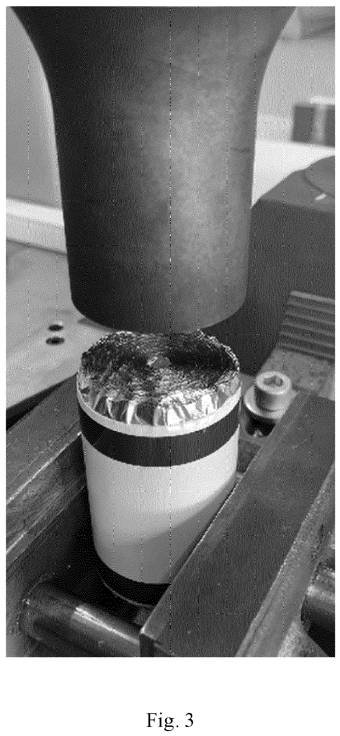

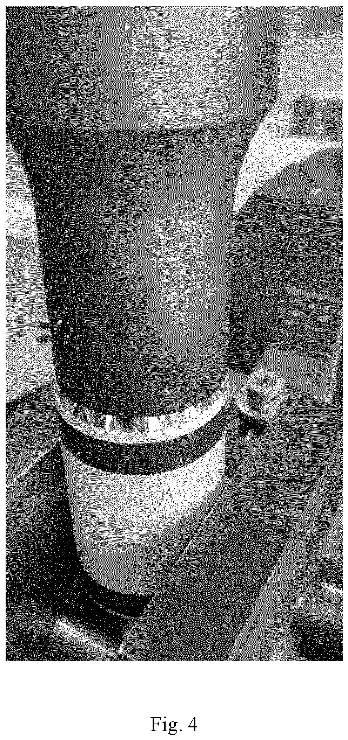

Next, the wound battery cell body 10 and the horn 3 are moved in step C with respect to each other from the initial position to the working position. Figure 3 shows a first intermediate position. Here, the horn 3 was moved along the central longitudinal axis towards the wound battery cell body 10 while the wound battery cell body 10 was maintained in a position stable manner in the fixture 7 of the ultrasonic device 1. Figure 4 shows the resulting working position, in which the working surface 5 of the horn 3 abuts the conductive portion 12 at the front-end of the wound battery cell body 10.

In this regard, it must be noted that the working surface is designed round in cross-section and that a radial extension of the working surface of the horn 3 corresponds to a radial extension of the wound battery cell body 10. Nevertheless, and according to a preferred embodiment, the cross-section of the horn may also be angular. Further, the dimension of the working surface 5 of the horn 3 may be adapted to the dimension of the front-end of the wound battery cell body 10, in particular such that the working surface 5 extends at least about 3 to 5 mm beyond the front-end of the wound battery cell body 10. Due to the different cross-sectional shapes of the horn 3, the horn 3 can be adapted to the preferred application and wound battery cell body 10. In each case, a certain extension of the horn 3 perpendicular to the central longitudinal axis, in particular an extension of at least 3 to 5 mm, has been proven to be advantageous as in particular due to this extension, a very reliable deforming, particularly bending, of the conductive portion 12 can be achieved.

Now, the wound battery cell body 10 is worked in step D by the horn 3 which is energized such that ultrasonic oscillations occur and are applied to the conductive portion 12 at the front-end of the wound battery cell body 10. In a preferred embodiment of the ultrasonic device 1, the working range is about 15 to 40 kHz, preferably about 15 to 30 kHz and more preferably about 20 kHz. Specifically, these working ranges ensure on the one hand the application of ultrasonics to the conductive portion 12 of the wound battery cell body 10 and on the other hand they facilitate a reliable connection of radially adjacent conductive portions.

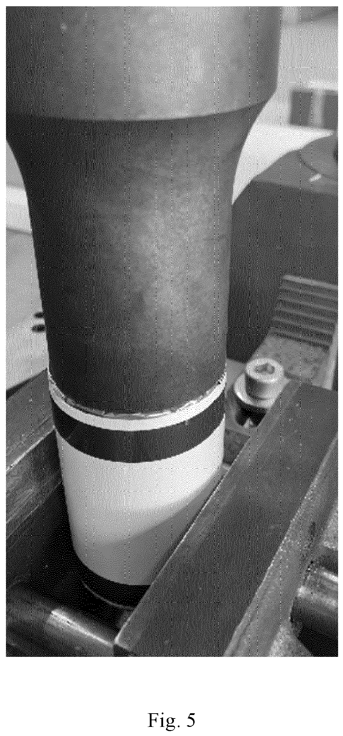

During the application of ultrasonics in step D, the horn 3 is further moved along the central longitudinal axis towards the wound battery cell body which results in a deformation of the conductive portion, preferably in a bending and particularly preferred in a radially inwardly bending of the conductive portion. Figure 5 shows the wound battery cell body, which is now a worked wound battery cell body 20, and the horn 3 at the end of the working step. In this regard it must be noted that the application of ultrasonics and the further movement of the horn 3 during the step of working may occur at the same time or one after the other.

In particular the step D of working is controlled by means of at least one of the following parameters: time, path, force, amplitude. If for example the conductive portion 12 has initially an extension of 1 mm in the longitudinal direction, the path the horn 3 travels during the working step is for example at most also 1 mm. As an alternative, the force applied by the horn 3 or the amplitude of the ultrasonic oscillation applied by the horn 3 to the conductive portion 12 may be used as primary parameter. In this regard, the term primary parameter is used for indicating the parameter used mainly for controlling the method, although other parameters may be used additionally. By means of this, the manufacturing method can be adapted to the wound battery cell body 10 to be worked for example depending on the thickness of the layer, the material used for the layer or the conductive portion 12, or the extension of the layer or the conductive portion 12 in the longitudinal direction.

After the step D of working, radially adjacent deformed conductive portions 22 are preferably fixedly connected to each other, in particular they are welded to each other. Due to the fixed connection, the connection is very reliable and resistant against vibrations or the like during use of a respectively worked wound battery cell body 20 in a vehicle or similar applications.

Further, and after the working step D has been completed and the worked wound battery cell body 20 is present, the horn 3 and the worked wound battery cell body 20 are moved with respect to each other from the working position to a removing position in step E. Preferably, and with respect to the above, the movement of horn 3 and worked wound battery cell body 20 occurs along the central longitudinal axis.

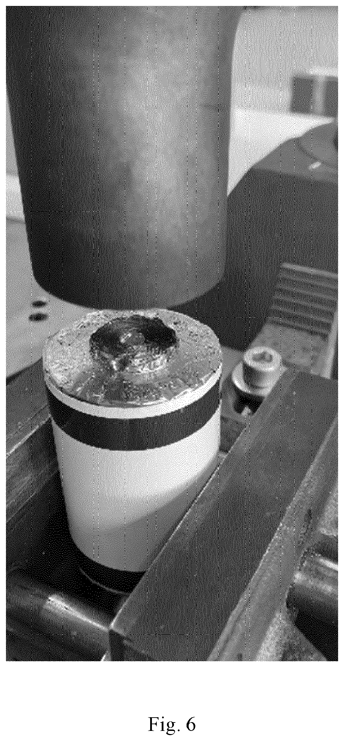

Figure 6 shows a second intermediate position during the step E of moving. As can be seen in this figure, the deformed conductive portion 22 is deformed such that the conductive portion 22 is bend during the step of working by the horn 3 radially inwardly so that an extension of the worked battery cell body 20 in the longitudinal direction is reduced. Further, radially adjacent deformed conductive portions 22 are in contact with each other after the step of working. The radially inwardly bending of the conductive portion has the advantage that the radial dimensions of the worked wound battery cell body 20 is not increased compared to the initially provided wound battery cell body 10.

Furthermore, and as can also be seen in figure 6, the working surface 5 of the horn 3 comprises a contour adapted to the wound battery cell body 10. In the present example, the working surface 5 of the horn 3 has a two-stepped contour. Thus, the working surface 5 is formed radially outwardly such that it deforms the conductive portion 12 wherein radially inwardly a recess is present at the working surface 5 so that the conductive portion 12 is radially inwardly not deformed. Additionally, a knurling may be present as profiled contour which further increases the reliability of the contact between radially adjacent conductive portions 12. Also, the contour of the working surface 5 may have a cone-shape or a pyramid shape, depending on the cross section of the horn 3. In each case, it is preferred that an imaginary tip of the cone or pyramid-shape is arranged in the horn 3 so that the working surface 5 comprises a respectively shaped indentation.

In the removing position, the distance between the working surface 5 of the horn 3 and the worked wound battery cell body 20 is increased. For example, the removing position is similar to the above-mentioned initial position.

Finally, the worked wound battery cell body 20 is removed from the ultrasonic device 1 in step F. To this end, and as the battery cell body was initially fixed at the lateral surface, now the fixing, for example the clamping, at the lateral surface is released in step F1. As a result, the worked wound battery cell body 20 can be removed from the ultrasonic device 1 and can be further processed for manufacturing a battery.

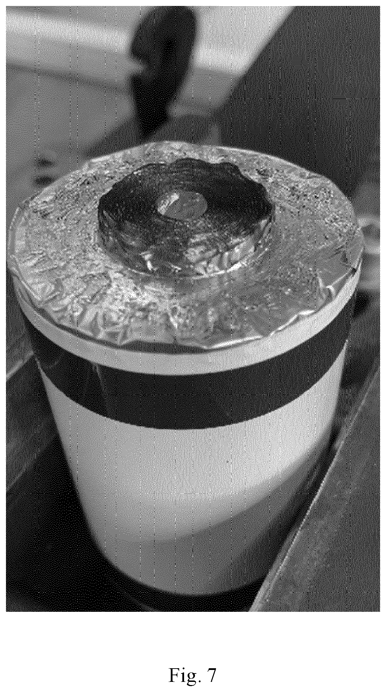

Figures 7 and 8 show different embodiments of resulting intermediate products for a battery cell having a deformed conductive portion 22 which was worked by means of ultrasonics.

An advantage of the manufacturing method as well as of the ultrasonic device 1 is that the conductive portion 12 of the wound battery cell body 10 can be deformed in an easy and reliable manner by means of a horn 3 of an ultrasonic device 1. Further, and due to the application of ultrasonics, a reliable connection between adjacent deformed conductive portions 22 results.

### 6. List of reference signs

- 1: ultrasonic device
- 3: horn
- 5: working surface
- 7: fixture

- 10: wound battery cell body
- 12: conductive portion

- 20: worked wound battery cell body
- 22: deformed conductive portion

- 30: jacket

## Claims

1. Manufacturing method of an intermediate product for a battery cell by means of ultrasonics, comprising the steps of:
a. providing (A) a wound battery cell body (10) in which a layer of a first electrode, a separator and a second electrode is wound around a central longitudinal axis in a plurality of windings, wherein at least one of the first and the second electrode comprises a conductive portion (12) extending at one front-end in the longitudinal direction, wherein the conductive portion (12) preferably comprises or consists of a metal foil,
b. placing (B) the wound battery cell body (10) in an ultrasonic device (1) in an initial position so that the front-end of the wound battery cell body (10) having the conductive portion (12) faces a front-end working surface (5) of a horn (3) of the ultrasonic device (1),
c. moving (C) the wound battery cell body (10) and the horn (3) with respect to each other from the initial position to a working position in which the front-end working surface (5) of the horn (3) abuts the front-end of the wound battery cell body (10), subsequently
d. working (D) the wound battery cell body (10) by applying ultrasonics to the conductive portion (12) at the front-end of the wound battery cell body (10) at least partially so that the conductive portion (12) is at least partially deformed, preferably bend, at the front-end of the wound battery cell body (10) by the horn (3) and a worked wound battery cell body (20) results, thereafter
e. moving (E) the worked wound battery cell body (20) and the horn (3) with respect to each other from the working position to a removing position and
f. removing (F) the worked wound battery cell body (20) from the ultrasonic device (1).

2. Manufacturing method according to claim 1, wherein the cross-section of the horn (3) is round or angular.

3. Manufacturing method according to one of the preceding claims, wherein the dimension of the working surface (5) of the horn (3) is adapted to the dimension of the front-end of the wound battery cell body (10), in particular such that the working surface (5) extends at least about 3 to 5 mm beyond the front-end of the wound battery cell body (10).

4. Manufacturing method according to one of the preceding claims, wherein the working surface (5) of the horn (3) comprises a contour adapted to the wound battery cell body (10), in particular an at least two-stepped contour and/or a profiled contour.

5. Manufacturing method according to one of the preceding claims, wherein the wound battery cell body (10) comprises a jacket (30).

6. Manufacturing method according to claim 5, wherein the jacket (30) has an extension in the longitudinal direction which is lower than an extension of the wound battery cell body (10) prior to the step of working.

7. Manufacturing method according to one of the preceding claims, wherein the method is controlled by means of at least one of the following parameters: time, path, force, amplitude.

8. Manufacturing method according to one of the preceding claims, wherein the conductive portion (12) is bend during the step of working by the horn (3) radially inwardly so that an extension of the worked wound battery cell body (20) in the longitudinal direction is reduced compared to the initial wound batter cell body (10).

9. Manufacturing method according to one of the preceding claims, wherein radially adjacent deformed conductive portions (22) are in contact with each other after the step of working.

10. Manufacturing method according to one of the preceding claims, wherein after the step of working radially adjacent deformed conductive portions (22) are fixedly connected to each other, in particular are welded to each other.

11. Manufacturing method according to one of the preceding claims, wherein the step of placing (B) comprises the step of fixing (B1) the wound battery cell body (10) at the lateral surface and the step of removing (F) comprises the step of releasing (F1) the fixing at the lateral surface of the worked wound battery cell body (20).

12. Intermediate product for a battery cell having a wound battery cell body (20) in which a layer of a first electrode, a separator and a second electrode is wound around a central longitudinal axis in a plurality of windings, wherein at least one of the first and the second electrode comprises a conductive portion (22), which was manufactured by means of the manufacturing method according to one of the preceding claims and comprises a front-end having a deformed conductive portion (22) worked by means of ultrasonics.

13. Ultrasonic device (1) for manufacturing an intermediate product for a battery cell having a wound battery cell body (10) in which a layer of a first electrode, a separator and a second electrode is wound around a central longitudinal axis in a plurality of windings, wherein at least one of the first and the second electrode comprises a conductive portion (12) extending at one front-end in the longitudinal direction, wherein the ultrasonic device (1) comprises an ultrasonic power supply, a converter, a booster and an ultrasonic horn (3), and the controller is adapted such that the ultrasonic device (1) can perform steps c. to e. of the manufacturing method according to claim 1.

14. Ultrasonic device (1) according to claim 13, wherein the working range is about 15 to 40 kHz, preferably about 15 to 30 kHz and more preferably about 20 kHz.

## Amended claims

### Amended claims in accordance with Rule 137(2) EPC.

1. Manufacturing method of an intermediate product for a battery cell by means of ultrasonics, comprising the steps of:
a. providing (A) a wound battery cell body (10) in which a layer of a first electrode, a separator and a second electrode is wound around a central longitudinal axis in a plurality of windings, wherein at least one of the first and the second electrode comprises a conductive portion (12) extending at one front-end in the longitudinal direction, wherein the conductive portion (12) preferably comprises or consists of a metal foil,
b. placing (B) the wound battery cell body (10) in an ultrasonic device (1) in an initial position so that the front-end of the wound battery cell body (10) having the conductive portion (12) faces a front-end working surface (5) of a horn (3) of the ultrasonic device (1),
c. moving (C) the wound battery cell body (10) and the horn (3) with respect to each other from the initial position to a working position in which the front-end working surface (5) of the horn (3) abuts the front-end of the wound battery cell body (10), subsequently
d. working (D) the wound battery cell body (10) by applying ultrasonics to the conductive portion (12) at the front-end of the wound battery cell body (10) at least partially so that the conductive portion (12) is at least partially deformed, preferably bend, at the front-end of the wound battery cell body (10) by the horn (3) and a worked wound battery cell body (20) results, thereafter
e. moving (E) the worked wound battery cell body (20) and the horn (3) with respect to each other from the working position to a removing position and
f. removing (F) the worked wound battery cell body (20) from the ultrasonic device (1).

2. Manufacturing method according to claim 1, wherein the cross-section of the horn (3) is round or angular.

3. Manufacturing method according to one of the preceding claims, wherein the dimension of the working surface (5) of the horn (3) is adapted to the dimension of the front-end of the wound battery cell body (10), in particular such that the working surface (5) extends at least about 3 to 5 mm beyond the front-end of the wound battery cell body (10).

4. Manufacturing method according to one of the preceding claims, wherein the working surface (5) of the horn (3) comprises a contour adapted to the wound battery cell body (10), in particular an at least two-stepped contour and/or a profiled contour.

5. Manufacturing method according to one of the preceding claims, wherein the wound battery cell body (10) comprises a jacket (30).

6. Manufacturing method according to claim 5, wherein the jacket (30) has an extension in the longitudinal direction which is lower than an extension of the wound battery cell body (10) prior to the step of working.

7. Manufacturing method according to one of the preceding claims, wherein the method is controlled by means of at least one of the following parameters: time, path, force, amplitude.

8. Manufacturing method according to one of the preceding claims, wherein the conductive portion (12) is bend during the step of working by the horn (3) radially inwardly so that an extension of the worked wound battery cell body (20) in the longitudinal direction is reduced compared to the initial wound battery cell body (10).

9. Manufacturing method according to one of the preceding claims, wherein radially adjacent deformed conductive portions (22) are in contact with each other after the step of working.

10. Manufacturing method according to one of the preceding claims, wherein after the step of working radially adjacent deformed conductive portions (22) are fixedly connected to each other, in particular are welded to each other.

11. Manufacturing method according to one of the preceding claims, wherein the step of placing (B) comprises the step of fixing (B1) the wound battery cell body (10) at the lateral surface and the step of removing (F) comprises the step of releasing (F1) the fixing at the lateral surface of the worked wound battery cell body (20).

12. Intermediate product for a battery cell having a wound battery cell body (20) in which a layer of a first electrode, a separator and a second electrode is wound around a central longitudinal axis in a plurality of windings, wherein at least one of the first and the second electrode comprises a conductive portion (22), which was manufactured by means of the manufacturing method according to one of the preceding claims and comprises a front-end having a deformed conductive portion (22) worked by means of ultrasonics.

13. Ultrasonic device (1) for manufacturing an intermediate product for a battery cell having a wound battery cell body (10) in which a layer of a first electrode, a separator and a second electrode is wound around a central longitudinal axis in a plurality of windings, wherein at least one of the first and the second electrode comprises a conductive portion (12) extending at one front-end in the longitudinal direction, wherein the ultrasonic device (1) comprises an ultrasonic power supply, a converter, a booster and an ultrasonic horn (3) as well as a controller, and the controller is adapted such that the ultrasonic device (1) can perform steps c. to e. of the manufacturing method according to claim 1.

14. Ultrasonic device (1) according to claim 13, wherein the working range is about 15 to 40 kHz, preferably about 15 to 30 kHz and more preferably about 20 kHz.
